# EUROPEAN PATENT SPECIFICATION

(11) **EP 2 548 788 B1**
(45) Date of publication and mention of the grant of the patent: **23.11.2016**
(21) Application number: 12175643.1
(22) Date of filing: 10.07.2012
(51) Int. Cl.: F16H 47/02, F16H 57/04

(54) **Single-axle agricultural machine with improved control**
Einachsige landwirtschaftliche Maschine mit verbesserter Steuerung
Machine agricole à essieu unique à commande améliorée

(30) Priority: 19.07.2011 IT MI20111335
(43) Date of publication of application: 23.01.2013
(73) Proprietor: BCS S.p.A., 20123 Milano (MI) (IT)
(72) Inventor: Vanone, Fabrizio Omodeo, 27036 MORTARA -PAVIA (IT)
(74) Representative: Giuli, Maurizio Mario Galdino

(56) References cited:
- EP-A2- 1 750 016
- CH-A- 362 928
- CH-A5- 607 699
- CH-A5- 688 857
- DE-A1- 4 223 846
- DE-A1- 19 803 547
- DE-A1- 19 936 264
- DE-U1- 29 504 612
- US-A- 2 662 686
- US-A1- 2006 283 183

## Description

The present invention relates to a single-axle agricultural machine with improved control.

The field of single-axle agricultural machines driven from the ground by an operator, includes rotavators or mowing-machines comprising a supporting frame on which an internal combustion engine having a limited power (for example up to 15 kw - 20 HP), is assembled.

This engine, with the interpositioning of a transmission group or gear equipped with a clutch and coupled with a single axle, is used for activating both a pair of wheels for moving the agricultural machine and also a power intake also called "PTO".

Rear tools such as "milling cutters" for hoeing the ground and also front tools such as cutting bars for cutting the grass, are connected to this power intake.

As already mentioned, these agricultural machines are driven from the ground by an operator who follows their movement and guides them by means of a handlebar (also called stilt) on which the activation commands of the agricultural machine are positioned (gas, brake, clutch, gear, activation of work tools, etc.).

In particular, the agricultural machine can have the configuration of a Rotavator. In this configuration, it is envisaged that a rear tool, called milling cutter, for hoeing the ground, is connected to the power intake (PTO) of the machine. This tool faces the user who therefore has in front of him, in succession: the milling cutter, stilts, gear, wheel axle and the engine.

In a second configuration of the agricultural machine of this type, the stilts are positioned at the engine-side. The tool is facing the front and consequently the user has in front of him, in succession: the stilts, the engine, the gear, the wheel axle and the tool. This machine configuration is suitable for the use of front tools, such as, for example, cutting bars, lawn mowers or shredders and it is in this configuration that the machine is called "mowing-machine".

It is sometimes possible to rotate the stilts in the same machine, and the machine can be used with both the milling cutter and with front tools, and in this case it is called a "reversible" machine.

As already mentioned, the majority of these agricultural machines are equipped with endothermic engines having a limited power (about 15 kw - 20 HP). The transmission of the movement from the engine to the wheels and the possibility of changing the speed or inverting the direction of the movement, are incorporated in the gearbox present on these machines.

In the most widely-used machines, a mechanical transmission is used, with a mechanical gear mechanism or, in any case, with a mechanical belt gear.

The use of a mechanical gear transmission allows the best cost/benefit ratio to be obtained with respect to the belt transmission, as it is more reliable and long-lasting. These machines are not excessively costly and are accessible to various users.

There are, however, machines with much higher costs which have a hydrostatic transmission.

The use of hydrostatic transmission for machines having a limited power essentially has two types of problems: costs and dissipation of power into heat.

As is evident, however, in hydrostatic transmission machines there is the possibility of continuously changing the advance speed, leaving the number of revolutions of the endothermic engine unchanged. In this way a large range of velocities is available.

In addition, in this type of machine, the greatest use of power is for the tool, whereas only a fraction is used for moving the machine.

If a hydrostatic transmission is present for activating both the tool and the movement of the machine, costly and delicate components of the plant must be used, such as valves, distributors, electrovalves, certain delicate connections, etc..

This part of the machine causes a considerable increase in the costs which, on the whole, make the machine almost inaccessible to a wide number of users.

CH 607699 illustrates a single-axle agricultural machine driven from the ground by an operator, having a very particular construction. This machine, in fact, does not have a mechanical gearbox but simply a reduction with two gears interposed between the engine and power intake. As there is no mechanical gearbox, there is no mechanical idle position through which the machine can be push- manoeuvred.

The endothermic engine is assembled on the same box which contains the differential, but has no connection with the same, as the differential is only and exclusively activated by a hydrostatic motor-pump group which can never be disconnected from the differential.

Another limitation of the configuration of CH 607699 is the difficulty in substituting the hydrostatic motor-pump group both for maintenance and for obtaining a different machine, as said group is assembled inside the differential box. Another limit of this configuration is that the same two-gear reduction which activates the force intake also drives the hydrostatic motor-pump group. This considerably restricts the choice of this group which has to rotate at the same regime established for the force intake.

The dissipation of power into heat is also another aspect which can cause various problems when both the tools and wheel traction are functioning. Only a minimum fraction of power is used, in fact, for moving the machine, whereas the greatest use of power is for the work tools.

An objective of the present invention is to overcome the drawbacks of the known art described above.

In particular, an objective of the present invention is to provide a single-axle agricultural machine with improved control which can be moved at high speeds and at the same time is capable of guaranteeing an optimum operativeness and efficiency of the work tools assembled and operating.

Another objective of the present invention is to provide, at a low cost, a single-axle agricultural machine with improved control and a high reliability.

The technical characteristics of the invention, according to the objectives indicated above, can be clearly found in the contents of the claims provided hereunder, and the advantages of the same will be more evident in the following detailed description with reference to the enclosed figures in which some preferred, but non-limiting, embodiments of the agricultural machine in question, are schematically illustrated, wherein:
- figures 1a and 1b respectively represent, in a side view and in a plan view from above, a first embodiment of the agricultural machine according to the present invention, in a schematic Rotavator configuration;
- figures 2a and 2b represent, in respective side views and in a plan view from above, a second embodiment of the agricultural machine according to the present invention in a schematic configuration as a mowing-machine;

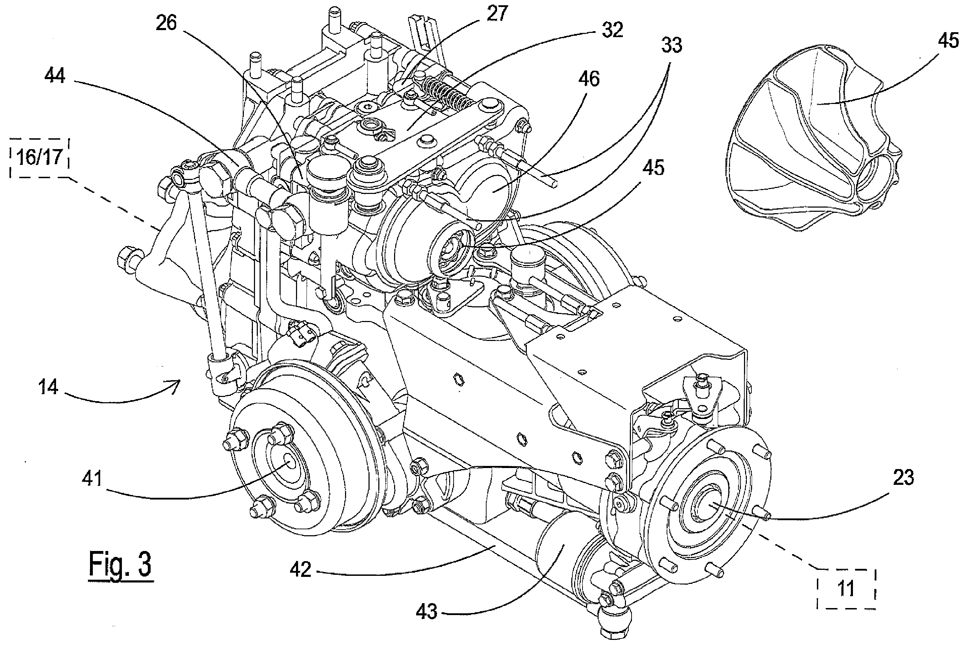

- figure 3 is a perspective view of the gearbox of the agricultural machine of the invention;

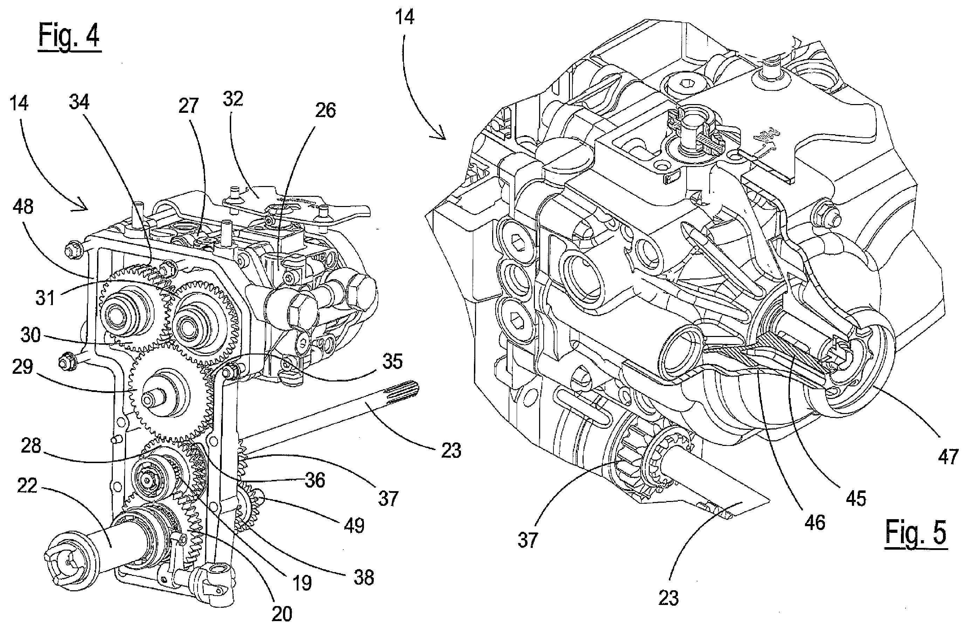

- figure 4 is a perspective view of a detail of the gearbox of figure 3 in the portion facing the tool;
- figure 5 is a further perspective view which illustrates, on an enlarged scale and in partial cross-section, an assembled detail of the particular cooling turbofan which is shown exploded in figure 3; and
- figure 6 is a vertical section in a raised longitudinal view of the gearbox of the machine according to the invention, already shown in figure 3.

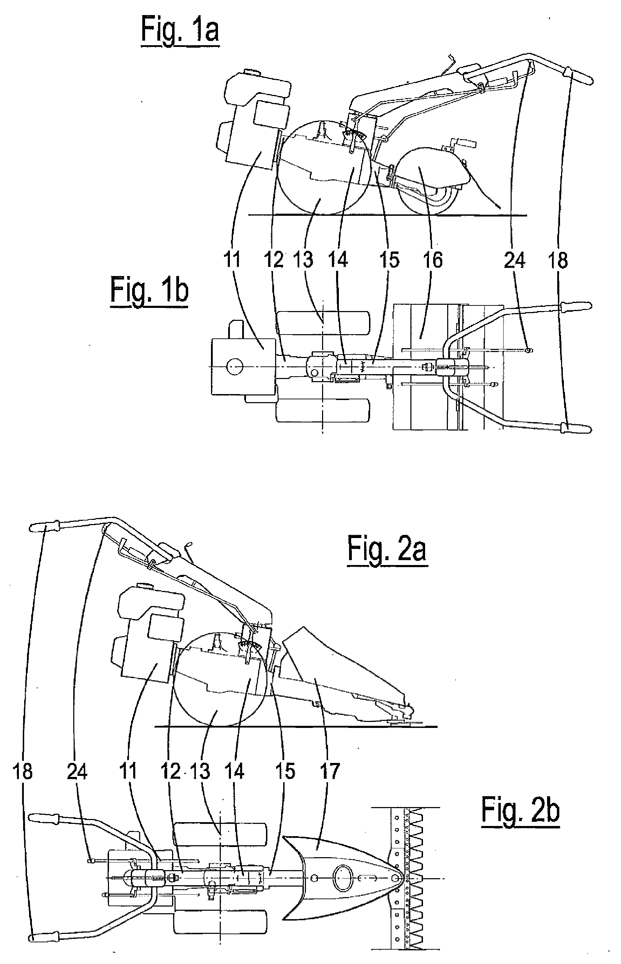

With specific reference to figures 1a, 1b, and 2a,2b, these show in schematic views, two single-axle agricultural machines with improved control, according to the invention, the first in a Rotavator configuration, the second in a mowing-machine configuration.

In both cases, the single-axle agricultural machine with improved control is suitable for being driven from the ground by an operator.

The machine comprises a series of main parts in sequence. First of all, an internal combustion engine 11 having a limited power (up to about 15 kw - 20 HP), is envisaged, together with a clutch group 12 and a mechanical gearbox 14. These are followed by two wheels 13 and a power intake 15 for a generic work tool such as, for example, a milling cutter 16 or a mower 17, in addition to a guiding handlebar of the motorcycle type 18, called "stilt" equipped with commands 24. The two wheels 13 and the power intake 15 are operated by the gearbox 14 as will be seen hereunder.

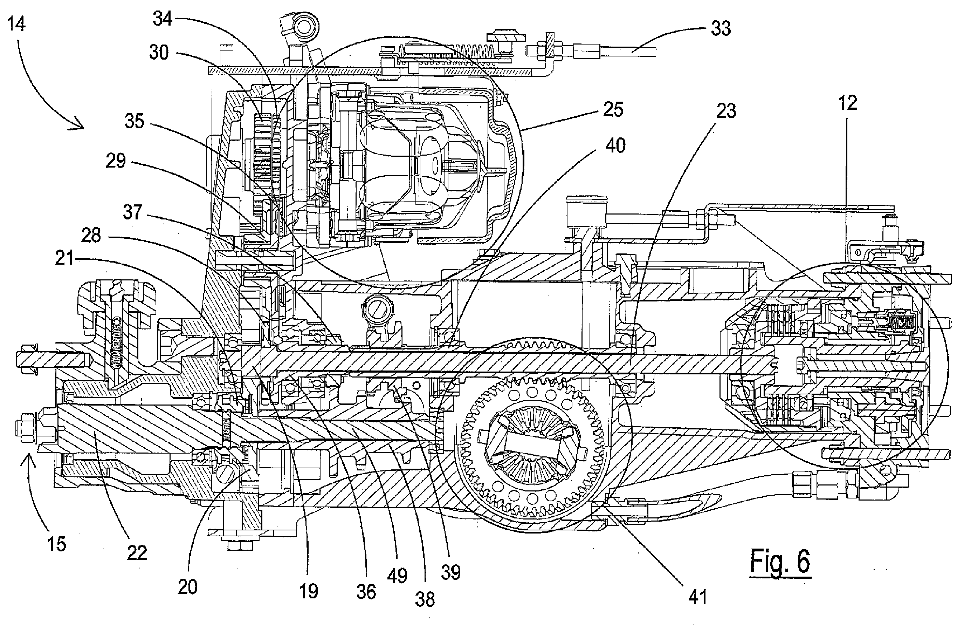

The clutch group, for example, consists of a multiple-disk clutch in an oil bath, as better shown with the circle 12 in figure 6.

This clutch group 12 drives a primary shaft 23 which, in turn, drives a gear reduction 19 and 20 at whose outlet a joint 21 is envisaged for transmitting movement to a shaft 22 of the power intake 15. Any tool (the milling cutter 16, for example, or the cutting bar 17, or any other tool) is connected to said shaft 22 of the power intake 15.

As the transmission of the power to the tool is completely mechanical with gears and bearings in an oil bath, it ensures an extremely high efficiency and minimum power dispersions.

According to the present invention, the agricultural machine envisages a hydrostatic group in the gearbox 14, identified as a whole with the circle 25 of figure 6 for the control of the wheels 13. A system called "compact" is used for this hydrostatic group 25. It essentially comprises a hydrostatic pump 26 and a hydrostatic engine 27, at least one of which having a variable capacity, positioned in a single compact unit, preferably above the mechanical gearbox 14, easily accessible for any type of intervention.

The hydrostatic group 25 acquires its movement directly from the internal combustion engine 11, through the clutch 12, by means of a first kinematic chain.

The hydrostatic group 25 is connected to the primary shaft 23 from which the pump 26 is activated and the elements of the first kinematic chain which form this connection, are positioned on a wall extension or an interposed flange 48 of the gearbox 14.

The primary shaft 23, in fact, carries a coupled gear 28 which, in turn, controls the idle gears 29 and 30. The idle gear 30 is engaged with a further gear 31, which completes the first kinematic chain which activates the hydrostatic pump 26 with a ratio suitable for obtaining the right rotation regime.

A control unit 32 is connected to cables 33 for the activation of the hydrostatic engine 27.

The variation in the speed is obtained by activating the pump 26 by means of the endothermic motor 11, and varying the displacement by means, for example, of the cable control 33.

The rotation of the hydrostatic engine 27 entrains another gear 34 in rotation, coaxial to the idle gear 30. In this way, the hydrostatic group 25 is, in turn, connected to a second kinematic chain which enters the gearbox 14 and, as can be seen, controls an axle 41 of the wheels 13.

In particular, this further gear 34, through the idle gear 35, causes the rotation of the gear 36 which brings the rotation back into the gearbox 14.

An idle shaft 49 with multiple gears 38, through a sliding gear 39, allows the speed ranges to be obtained if necessary, in addition to the idle condition.

A final countergear 40 drives the axle 41 of the wheels 13. This axle 41 of the wheels 13 can be variably configured, for example with a central blockable differential or steering groups with independent clutches and brakes or reducers added before the wheels.

According to the present invention, it should also be noted that the transmission ratio between the hydrostatic motor-pump group and the differential can be varied in order to obtain various speed ranges. This characteristic is advantageous as within these ranges, the advancing rate of the machine, thanks to the hydrostatic motor-pump group, can vary continuously from a minimum to a maximum. This function is useful, for example, for helping to surmount steep slopes or obstacles and for increasing manoeuvrability in narrow spaces. The hydrostatic group uses, as hydraulic fluid, the same oil that lubricates the gearbox.

The oil is sucked in by means of a tube 42 through a filter 43 situated in a point furthest away from the carter group of the transmission.

The oil is then discharged from the hydrostatic group through a tube 44 at the opposite end of the hydrostatic group. This arrangement creates a long route for the oil to follow between suction and discharge. This long route substantially favours a decrease in the temperature.

The use of the hydrostatic group solely for moving the agricultural machine causes a modest generation of heat with respect to the known agricultural machines with complete hydrostatic control for both the functioning of the tools and movement.

Furthermore, in a machine according to the present invention, although there are minimum quantities of dissipation of power due to heat, this is specifically caused by the hydrostatic group.

According to the invention, in order to further reduce this dissipation, a particular cooling group associated with the hydrostatic group has been added to the arrangement.

The use is envisaged, in fact, of a turbofan 45 enclosed in a carter 46 which directs the air flow to come into contact with the whole hydrostatic group.

The turbofan 45 has radial flaps which are low at the air inlet and connected to a base thereof. The carter 46 is shaped to follow the outer form of the turbofan 45 like a fairing, thus guiding the flow of cooling air.

The fresh air is sucked in from a central hole 47, radially centrifuged, oriented for following the shape of the carter 46 and is discharged outside through a peripheral opening (not shown).

This allows the dissipation of power due to heat, to be drastically reduced, unlike the known machines.

This type of solution proposes a single-axle agricultural machine with improved control with a combined control system which optimizes the functioning, reducing the costs of the same.

In the agricultural machine according to the present invention, thanks to the presence of the two kinematic chains (28, 29, 30, 31) and (34, 35, 36, 40), it is possible to use any hydrostatic group (pump 26 - hydrostatic motor 27) without having to modify other parts of the mechanical transmission.

Although there is the presence of a hydrostatic group in this agricultural machine, costly components of the hydraulic plant are totally absent, the actuation of the force intake being effected by means of a traditional mechanical transmission.

By maintaining the control of the power intake through a mechanical transmission and endothermic motor, the advantages deriving from its known reliability are also preserved.

The hydrostatic component is inserted on this basis, whose use is thus less invasive from both a technical and economical point of view.

Contrary to the known solutions in this power range, in which the cooling is generally assigned to a simple axial flow fan, the arrangement of a turbofan with a streamlined carter improves the cooling.

By limiting the use of the hydrostatic technology to traction alone, the power losses typical of hydrostatic groups are thus minimized, maintaining however the same significant advantages.

The invention thus conceived can undergo numerous modifications and variants, all included in the scope of the inventive concept; furthermore, all the details can be substituted by technically equivalent elements.

## Claims

1. A single-axle agricultural machine with improved control, comprising an internal combustion engine (11), having a limited power, a clutch block (12) and a mechanical gearbox (14), wheels (13) and a power intake (15) for work tools (16,17), in addition to a driving handlebar (18) equipped with controls (24), said wheels (13) and said power intake (15) being controlled by the mechanical gearbox (14), a primary control shaft (23) of a gear reduction (19,20) protruding from the clutch block (12), at the outlet of said reduction (19,20) there being a joint (21) for transmitting the motion to a shaft (22) of the power intake (15), a separate hydrostatic group which acquires the motion directly from the internal combustion engine (11) through said clutch block (12) by means of a first kinematic chain (28, 29, 30, 31), **characterized in that** said mechanical gearbox is a shift gearbox (14) and that said hydrostatic group in turn is connected to a second kinematic chain (34, 35, 36, 40) which enters the shift gearbox (14) and, through its final idle gear (40), controls an axle (41) of the wheels (13), wherein said second kinematic chain comprises a further gear (34) coaxial to an idle gear (30) which, in turn, by means of an idle gear (35), causes the rotation of a gear (36) which brings the rotation movement back into the shift gearbox (14), being further provided an idle shaft (49) with multiple gear (38), through a sliding gear (39), which allows the speed range to be obtained.

2. The single-axle agricultural machine according to claim 1, **characterized in that** said hydrostatic group essentially comprises a hydrostatic pump (26) and a hydrostatic motor (27), at least one of which having a variable displacement, positioned in a single compact unit, said hydrostatic group being connected to a primary shaft (23) of the gearbox (14).

3. The single-axle agricultural machine according to claim 1 or 2, **characterized in that** said hydrostatic group is connected to a primary shaft (23) of the gearbox (14) by means of said first kinematic chain which comprises a gear (28) fitted onto the primary shaft (23) which in turn drives idle gears (29, 30), one of these (30) being engaged with a further gear (31) which activates the hydrostatic pump (26).

4. The single-axle agricultural machine according to one or more of the previous claims from 1 to 3, **characterized in that** it also comprises a cooling group (45, 46, 47) associated with the hydrostatic group.

5. The single-axle agricultural machine according to claim 4, **characterized in that** said cooling group comprises a turbofan (45) enclosed by a carter (46) which directs a flow of air to come into contact with the whole hydrostatic group.

6. The single-axle agricultural machine according to claim 5, **characterized in that** said turbofan (45) has radial flaps which are low at the air inlet and connected to a base thereof.

7. The single-axle agricultural machine according to claim 5 or 6, **characterized in that** said carter (46) is shaped to follow, as a fairing, the outer form of the turbofan (45).

## Patentansprüche

1. Einachsige landwirtschaftliche Maschine mit verbesserter Steuerung, die umfasst: eine Brennkraftmaschine (11) mit einer beschränkten Leistung, einen Kupplungsblock (12) sowie einen mechanischen Getriebekasten (14), Räder (13) sowie einen Leistungseinlass (15) für Arbeitswerkzeuge (16, 17) zusätzlich zu einer Lenkstange (18), die mit Steuerungen (24) ausgestattet ist, wobei die Räder (13) und der Leistungseinlass (15) durch den mechanischen Getriebekasten (14) gesteuert sind, wobei eine primäre Steuerwelle (23) einer Untersetzung (19, 20) von dem Kupplungsblock (12) an dem Auslass der Untersetzung (19, 20) vorragt, wobei eine Verbindung (21) zur Übertragung der Bewegung an eine Welle (22) des Leistungseinlasses (15) vorgesehen ist, eine separate hydrostatische Gruppe, die die Bewegung direkt von der Brennkraftmaschine (11) durch den Kupplungsblock (12) mittels einer ersten kinematischen Kette (28, 29, 30, 31) aufnimmt,
**dadurch gekennzeichnet, dass** der mechanische Getriebekasten ein Schaltgetriebekasten (14) ist und dass die hydrostatische Gruppe ihrerseits mit einer zweiten kinematischen Kette (34, 35, 36, 40) verbunden ist, die in den Schaltgetriebekasten (14) eintritt und durch sein letztes Zwischenzahnrad (40) eine Achse (41) der Räder (13) steuert, wobei die zweite kinematische Kette ein weiteres Zahnrad (34) koaxial zu einem Zwischenzahnrad (30) umfasst, das seinerseits mittels eines Zwischenzahnrades (35) eine Rotation eines Zahnrades (36) bewirkt, das die Rotationsbewegung in den Schaltgetriebekasten (14), der ferner mit einer Leerlaufwelle (49) mit einem Mehrfachzahnrad (38) versehen ist, durch ein verschiebbares Zahnrad (39) zurückbringt, das ermöglicht, dass der Drehzahlbereich erhalten werden kann.

2. Einachsige landwirtschaftliche Maschine nach Anspruch 1, **dadurch gekennzeichnet, dass** die hydrostatische Gruppe im Wesentlichen eine hydrostatische Pumpe (26) und einen hydrostatischen Motor (27) umfasst, von denen zumindest einer eine variable Verdrängung aufweist, die in einer einzelnen kompakten Einheit positioniert sind, wobei die hydrostatische Gruppe mit einer Primärwelle (23) des Getriebekastens (14) verbunden ist.

3. Einachsige landwirtschaftliche Maschine nach einem der Ansprüche 1 oder 2, **dadurch gekennzeichnet, dass** die hydrostatische Gruppe mit einer Primärwelle (23) des Getriebekastens (14) mittels der ersten kinematischen Kette verbunden ist, die ein Zahnrad (28) umfasst, das an die Primärwelle (23) angebaut ist und seinerseits Zwischenzahnräder (29, 30) antreibt, von denen eines (30) mit einem weiteren Zahnrad (31) in Eingriff steht, das die hydrostatische Pumpe (26) aktiviert.

4. Einachsige landwirtschaftliche Maschine nach einem der vorhergehenden Ansprüche 1 bis 3, **dadurch gekennzeichnet, dass** sie auch eine Kühlgruppe (45, 46, 47) umfasst, die der hydrostatischen Gruppe zugeordnet ist.

5. Einachsige landwirtschaftliche Maschine nach Anspruch 4, **dadurch gekennzeichnet, dass** die Kühlgruppe einen Turbolüfter (45) umfasst, der von einem Gehäuse (46) umschlossen ist, das eine Luftströmung in Kontakt mit der gesamten hydrostatischen Gruppe lenkt.

6. Einachsige landwirtschaftliche Maschine nach Anspruch 5, **dadurch gekennzeichnet, dass** der Turbolüfter (45) radiale Platten aufweist, die an dem Lufteinlass niedrig und mit dessen Basis verbunden sind.

7. Einachsige landwirtschaftliche Maschine nach einem der Ansprüche 5 oder 6, **dadurch gekennzeichnet, dass** das Gehäuse (46) so geformt ist, dass es als eine Verkleidung der Außenform des Turbolüfters (45) folgt.

## Revendications

1. Machine agricole à essieu unique à commande améliorée, comprenant un moteur à combustion interne (11) ayant une puissance limitée, un bloc d'embrayage (12) et une boîte de vitesses mécanique (14), des roues (13) et une prise de force (15) pour des outils de travail (16, 17), en plus d'un guidon de conduite (18) équipé de commandes (24), lesdites roues (13) et ladite prise de force (15) étant commandées par la boîte de vitesses mécanique (14), un arbre de commande primaire (23) d'un engrenage réducteur (19, 20) dépassant du bloc d'embrayage (12), un moyen d'accouplement (21) pour la transmission du mouvement à un arbre (22) de la prise de force (15) étant présent à la sortie dudit engrenage réducteur (19, 20), et comprenant un groupe hydrostatique séparé qui acquiert le mouvement directement du moteur à combustion interne (11) par l'intermédiaire dudit bloc d'embrayage (12) au moyen d'une première chaîne cinématique (28, 29, 30, 31), **caractérisée en ce que** ladite boîte de vitesses mécanique est une boîte de vitesses à décalage (14) et **en ce que** ledit groupe hydrostatique est à son tour relié à une deuxième chaîne cinématique (34, 35, 36, 40) qui entre dans la boîte de vitesses à décalage (14) et, par l'intermédiaire de son pignon intermédiaire final (40), commande un essieu (41) des roues (13), ladite deuxième chaîne cinématique comprenant un pignon supplémentaire (34) coaxial à un pignon intermédiaire (30) qui, à son tour, au moyen d'un pignon intermédiaire (35), entraîne la rotation d'un pignon (36) qui ramène le mouvement de rotation dans la boîte de vitesses à décalage (14), un arbre intermédiaire (49) avec pignon multiple (38) étant en outre prévu, lequel permet, par l'intermédiaire d'un pignon baladeur (39), d'obtenir la gamme de vitesses.

2. Machine agricole à essieu unique selon la revendication 1, **caractérisée en ce que** ledit groupe hydrostatique comprend essentiellement une pompe hydrostatique (26) et un moteur hydrostatique (27), au moins l'un d'entre eux présentant une cylindrée variable, positionnés dans une seule unité compacte, ledit groupe hydrostatique étant relié à un arbre primaire (23) de la boîte de vitesses (14).

3. Machine agricole à essieu unique selon la revendication 1 ou 2, **caractérisée en ce que** ledit groupe hydrostatique est relié à un arbre primaire (23) de la boîte de vitesses (14) au moyen de ladite première chaîne cinématique qui comprend un pignon (28) monté sur l'arbre primaire (23) qui, à son tour, entraîne des pignons intermédiaires (29, 30), dont l'un (30) est en prise avec un pignon supplémentaire (31) qui active la pompe hydrostatique (26).

4. Machine agricole à essieu unique selon au moins l'une des revendications précédentes 1 à 3, **caractérisée en ce qu'**elle comprend également un groupe de refroidissement (45, 46, 47) associé au groupe hydrostatique.

5. Machine agricole à essieu unique selon la revendication 4, **caractérisée en ce que** ledit groupe de refroidissement comprend un turboventilateur (45) enfermé dans un carter (46), qui dirige un flux d'air de façon qu'il entre en contact avec tout le groupe hydrostatique.

6. Machine agricole à essieu unique selon la revendication 5, **caractérisée en ce que** ledit turboventilateur (45) présente des volets radiaux qui sont bas au niveau de l'entrée d'air et reliés à une base de celle-ci.

7. Machine agricole à essieu unique selon la revendication 5 ou 6, **caractérisée en ce que** ledit carter (46) est formé pour épouser, à la manière d'un carénage, la forme extérieure du turboventilateur (45).
